Europäisches Patentamt

European Patent Office

Office européen des brevets

(11) Veröffentlichungsnummer: **0 179 261**
**A2**

# EUROPÄISCHE PATENTANMELDUNG

(21) Anmeldenummer: 85111536.6

(51) Int. Cl.⁴: **G 11 B 31/00**

(22) Anmeldetag: 14.09.85

(30) Priorität: 24.10.84 DE 3438873

(43) Veröffentlichungstag der Anmeldung:
30.04.86 Patentblatt 86/18

(84) Benannte Vertragsstaaten:
DE FR

(71) Anmelder: Blaupunkt-Werke GmbH
Robert-Bosch-Strasse 200
D-3200 Hildesheim(DE)

(72) Erfinder: Diepholz, Tilo, Dipl.-Ing.
Struckmannstrasse 7
D-3200 Hildesheim(DE)

(72) Erfinder: Friedrich, Siegfried, Dipl.-Ing.
Am Kuckucksberg 8a
D-3207 Harsum(DE)

(74) Vertreter: Ellers, Norbert, Dipl.-Phys.
Blaupunkt-Werke GmbH Robert-Bosch-Strasse 200
D-3200 Hildesheim(DE)

(54) Autoradio.

(57) Es wird ein Autoradio vorgeschlagen, dessen Bedienbarkeit vereinfacht und dessen Frontseite übersichtlicher gestaltet werden soll. Zu diesem Zweck übernimmt ein drei Stellungen aufweisender Schalter (12) des Autoradios nach Einschieben einer Kassette (17) in ein Kassettenwiedergabeteil des Autoradios (11) eine Kassetten-Steuer-Funktion. Wird dann eine von zwei Betätigungsflächen (14, 15) des Schalters gedrückt, so wird beispielsweise anstelle des Sendersuchlaufs der schnelle Bandvorlauf oder der schnelle Bandrücklauf des Kassettenwiedergabeteils eingeschaltet.

FIG. 2

EP 0 179 261 A2

## Autoradio

### Stand der Technik

Die Erfindung geht von einem Autoradio nach der Gattung des Patentanspruchs aus.

Es ist ein Autoradio mit Kassettenwiedergabeteil bekannt (Funkschau, 1983, Heft 5, Seite 48), bei dem das Autoradio durch das Einschieben einer Bandkassette in das Kassettenwiedergabeteil auf Durchsagekennung geschaltet wird, wobei die Kassettenwiedergabe bei einer Verkehrsdurchsage automatisch unterbrochen wird. Weiterhin ist ein Autoradio bekannt, bei dem Bedienelemente zum Steuern bestimmter Funktionen des Autoradios durch Betätigung eines Mode-Schalters von einer ersten Funktion auf eine zweite Funktion umgeschaltet werden. Auf diese Weise kann die Zahl der Bedienelemente verringert und die Frontseite des Autoradios übersichtlicher gestaltet werden.

### Vorteile der Erfindung

Das erfindungsgemäße Autoradio mit den kennzeichnenden Merkmalen des Anspruchs hat den Vorteil, daß allein durch das Einschieben einer Kassette ein an sich für die Sendersuchlauf-Funktion verwendeter Sendersuchlaufschalter eine Funktion des Kassettenwiedergabeteils übernimmt, wie zum Beispiel den schnellen Vorlauf und den schnellen Rücklauf. Es wird dabei nicht nur ein ohnehin vorhandenes Bedienelement doppelt ausgenutzt,

...

sondern es wird darüber hinaus in sinnvoller Weise eine Bedienungsvereinfachung geschaffen, die verhindert, daß der Kraftfahrer unnötigerweise
durch die Betätigung eines zusätzlichen Schalters für die Funktionsumschaltung abgelenkt wird.


Zeichnung


Ein Ausführungsbeispiel der Erfindung wird in der Zeichnung anhand
mehrerer Figuren dargestellt und in der nachfolgenden Beschreibung näher
erläutert. Die Zeichnung zeigt in


Figur 1 eine Ansicht eines erfindungsgemäßen Autoradios,


Figur 2 eine perspektivische Teilansicht eines Autoradios nach Figur 1
        in vergrößertem Maßstab und


Figur 3 ein Blockschaltbild einer elektronischen Steuerung für das
        erfindungsgemäße Autoradio.


Beschreibung der Erfindung


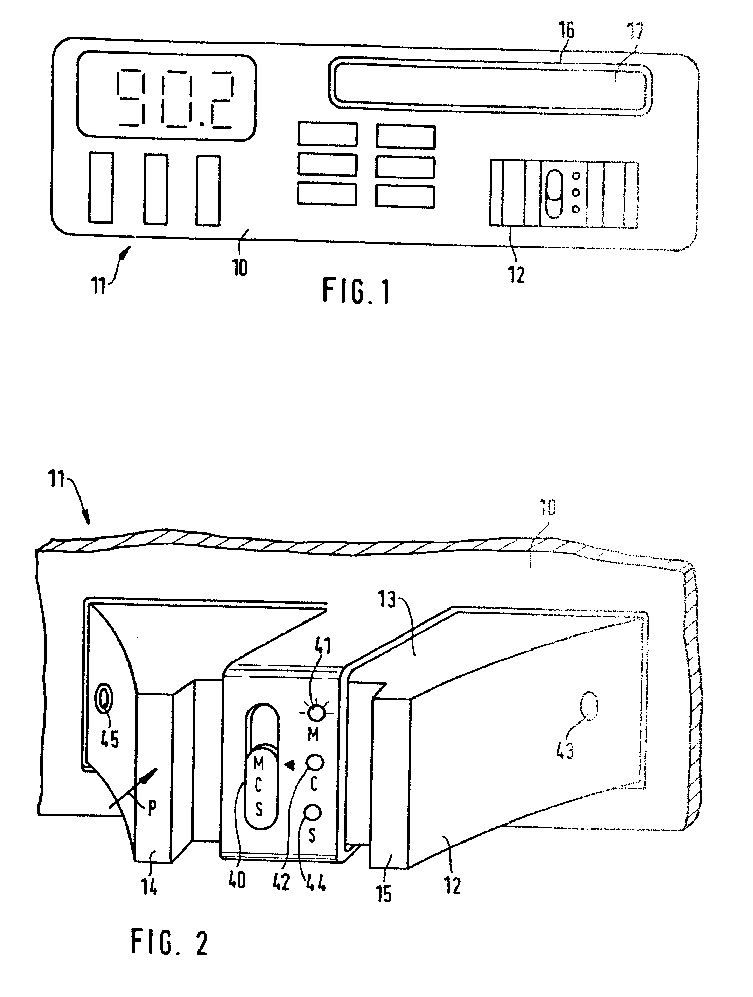

In den Figuren 1 und 2 bezeichnet 10 die Frontseite eines Autoradios 11,
das unter anderem einen Sendersuchlaufschalter 12 aufweist. Der
Schalter 12 ist vorzugsweise als Wippschalter ausgebildet, dessen Schaltwippe 13 mit zwei Betätigungsflächen 14, 15 versehen ist. Durch Fingerdruck auf eine der beiden Betätigungsflächen kann der Schalter 12 wahlweise in eine von zwei Schaltstellungen überführt werden, in denen der Sendersuchlauf entweder in Richtung höherer oder tieferer Sendefrequenzen durchgeführt wird. Weiterhin gehört zu dem Autoradio ein Kassettenwiedergabeteil zum Abspielen von in ein Kassettenfach 16 einzuschiebenden Bandkassetten 17.

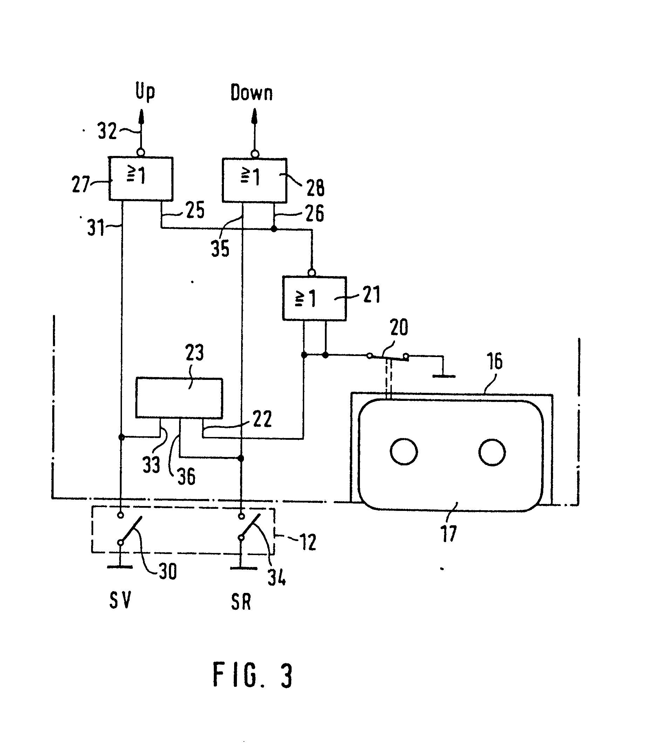

Soll eine Bandkassette abgespielt werden, so wird diese in das Kassettenfach 16 (vergleiche Figur 1 und 3) eingeschoben. Bei voll eingeschobener Kassette wird eine Kassettenschalter 20 geschlossen und damit der Sendersuchlaufschalter 12 von seiner Sendersuchlauf-Funktion auf eine Kassetten-Funktion vorbereitet. Im einzelnen wird dabei über den geschlossenen Kassettenschalter 20 Massepotential an zwei miteinander verbundene Eingänge einer ersten NOR-Schaltung 21 und einen ersten Eingang 22 einer elektronischen Steuerschaltung 23 geleitet. Das Massepotential an den Eingängen der ersten NOR-Schaltung 21 hat ein H-Potential an je einem ersten Eingang 25, 26 einer zweiten und dritten NOR-Schaltung 27, 28 zur Folge. Wird dann eine der Betätigungsflächen 14, 15 des Sendersuchlaufschalters 12, zum Beispeil die Betätigungsfläche 14, in Pfeilrichtung P gedrückt, so wird ein dieser Betätigungsfläche zugeordneter erster Schalter 30 geschlossen. Damit liegt auch an einem zweiten Eingang 31 der zweiten NOR-Schaltung 27 das Massepotential. Durch die NOR-Verknüpfung steht am Ausgang 32 der zweiten NOR-Schaltung 27 ein H-Potential

...

0179261

zur Verfügung, das den bei nicht eingeschobener Kassette ausgelösten Sendersuchlauf in Richtung höherer Frequenzen (Up) blockiert. Dafür bewirkt das an einem zweiten Eingang 33 der Steuerungsschaltung 23 liegende Massepotential eine Auslösung des schnellen Bandvorlaufs (SV).

Wird bei eingeschobener Kassette anstelle der Betätigungsfläche 14 die Betätigungsfläche 15 gedrückt, so wird ein dieser zugeordneter zweiter Schalter 34 geschlossen, so daß auch an einem zweiten Eingang 35 der dritten NOR-Schaltung 28 das Massepotential liegt. Das Massepotenial an den Eingängen 26 und 35 bewirkt, daß die dritte NOR-Schaltung 28 ein H-Potential abgibt, das den bei nicht eingeschobener Kassette ausgelösten Sendersuchlauf in Richtung tieferer Senderfrequenz (down) blockiert. Dafür bewirkt das an einem dritten Eingang 36 der Steuerschaltung 23 liegende Massepotential eine Auslösung des schnellen Bandrücklaufs (SR).

Vorausgesetzt wird bei dem Autoradio ein Kassettenwiedergabeteil, dessen Funktionen elektronisch steuerbar sind.

Patentanspruch


Autoradio mit einem eine mittlere und zwei äußere Stellungen aufweisenden Schalter für einen aufwärts bzw. abwärts gerichteten Suchlauf und mit einem eingebauten Kassettenwiedergabeteil,

dadurch gegekennzeichnet,

daß der Schalter (12) durch das Einschieben einer Kassette (17) in das Kassettenwiedergabeteil von der Sendersuchlauffunktion automatisch auf die Steuerung des schnellen Vorlaufs bzw. Rücklaufs umgeschaltet wird.

R. Nr. 1033

0179261

FIG. 1

FIG. 2

Up      Down

32          31

27  ≥1        ≥1  28
              25
31              26

              35

              ≥1  21

              20

23                    16

              22

33  36              17

SV      SR
30      34      12

FIG. 3